# EUROPEAN PATENT SPECIFICATION

(11) **EP 2 446 639 B1**
(45) Date of publication and mention of the grant of the patent: **05.09.2018**
(21) Application number: 10792310.4
(22) Date of filing: 22.06.2010
(51) Int. Cl.: G09G 3/00, H04N 13/00

(54) **IMAGE DISPLAY APPARATUS, 3D GLASSES, AND METHOD FOR OPERATING THE IMAGE DISPLAY APPARATUS**
BILDANZEIGEVORRICHTUNG, 3D-BRILLE UND BETRIEBSVERFAHREN FÜR DIE BILDANZEIGEVORRICHTUNG
APPAREIL D'AFFICHAGE D'IMAGES, LUNETTES 3D, ET PROCÉDÉ DE FONCTIONNEMENT DUDIT APPAREIL

(30) Priority: 22.06.2009 US 219350 P
(43) Date of publication of application: 02.05.2012
(73) Proprietor: LG Electronics Inc., Seoul 07336 (KR)
(72) Inventor: JI, Maeng Sob, Seoul 137-724 (KR)
(74) Representative: Cabinet Plasseraud
(86) International application number: PCT/KR2010/004040
(87) International publication number: WO 2010/151028

(56) References cited:
- JP-A- H1 175 223
- KR-A- 20000 075 116
- KR-A- 20030 068 228
- US-A1- 2002 114 072
- US-A1- 2005 018 095
- US-A1- 2006 061 652

## Description

### Technical Field

The present invention relates to an image display apparatus, three-dimensional (3D) glasses, and a method for operating the image display apparatus, and more particularly, to an image display apparatus, 3D glasses, and a method for operating the image display apparatus. which can increase user convenience.

### Background Art

An image display apparatus has a function of displaying images viewable to a user. The image display apparatus can display a broadcast program selected by the user on a display from among broadcast programs transmitted from broadcasting stations. The recent trend in broadcasting is a worldwide shift from analog broadcasting to digital broadcasting.

As it transmits digital audio and video signals, digital broadcasting offers many advantages over analog broadcasting such as robustness against noise, less data loss, ease of error correction, and the ability to provide high-definition, clear images. Digital broadcasting also allows interactive services for viewers.

Many studies have recently been conducted on 3D imaging and stereoscopy is being widely accepted and popular in computer graphics and other various environments and technologies. Different 3D imaging and stereoscopy display apparatus are already known in documents JPH1175223 and US2006061652.

### Disclosure of Invention Technical Problem

Therefore, the present invention has been made in view of the above problems, and it is an object of the present invention to provide an image display apparatus, 3D glasses, and a method for operating the image display apparatus, which can increase user convenience.

It is another object of the present invention to provide an image display apparatus for changing an image according to whether a user wears 3D glasses or not, the 3D glasses, and a method for operating the image display apparatus.

### Solution to Problem

In accordance with an aspect of the present invention, the above and other objects can be accomplished by the provision of three-dimensional glasses according to claim 1 and image display apparatus according to claim 2.

### Advantageous Effects of Invention

As is apparent from the above description of the embodiments of the present invention, it is determined whether a user wears 3D glasses and an on-going image is changed to a 2D or 3D image on a display according to the determination. Since the user can view an appropriate image with the glasses on or off, user convenience is increased.

A 3D image is differentiated from a 2D image in luminance, color, and/or contrast, thereby further increasing user convenience.

In addition, a 3D image is displayed at a different power level from a 2D image. Therefore, unnecessary power is saved.

### Brief Description of Drawings

The above and other objects, features and other advantages of the present invention will be more clearly understood from the following detailed description taken in conjunction with the accompanying drawings, in which:
FIG. 1 is a block diagram of an image display apparatus according to an exemplary embodiment of the present invention;
FIG. 2 illustrates an example of 3D glasses illustrated in FIG. 1;
FIG. 3 is a block diagram of the 3D glasses and the image display apparatus illustrated in FIG. 1;
FIG. 4 is an exemplary block diagram of a power supply and a display illustrated in FIG. 1;
FIG. 5 illustrates an exemplary layout of backlight lamps illustrated in FIG. 4;
FIG. 6 is a block diagram of a controller illustrated in FIG. 1;
FIGS. 7A to 7E illustrate 3D formats;
FIGS. 8A and 8B illustrate operations of the 3D glasses according to 3D formats illustrated in FIGS. 7A to 7E.
FIG. 9 illustrates formation of 3D images by combining left-eye and right-eye images.
FIGS. 10A and 10B illustrate different depth illusions according to different disparities between a left-eye image and a right-eye image;
FIG. 11 is a flowchart illustrating a method for operating the image display apparatus according to an exemplary embodiment of the present invention; and
FIGS. 12 to 19 are views referred to for describing the method for operating the image display apparatus, illustrated in FIG. 11.

### Best Mode for Carrying out the Invention

Exemplary embodiments of the present invention will be described below with reference to the attached drawings.

The terms "module", "portion", and "unit" attached to describe the names of components are used herein to help the understanding of the components and thus they should not be considered as having specific meanings or roles. Accordingly, the terms "module" and "portion" may be interchangeable in their use.

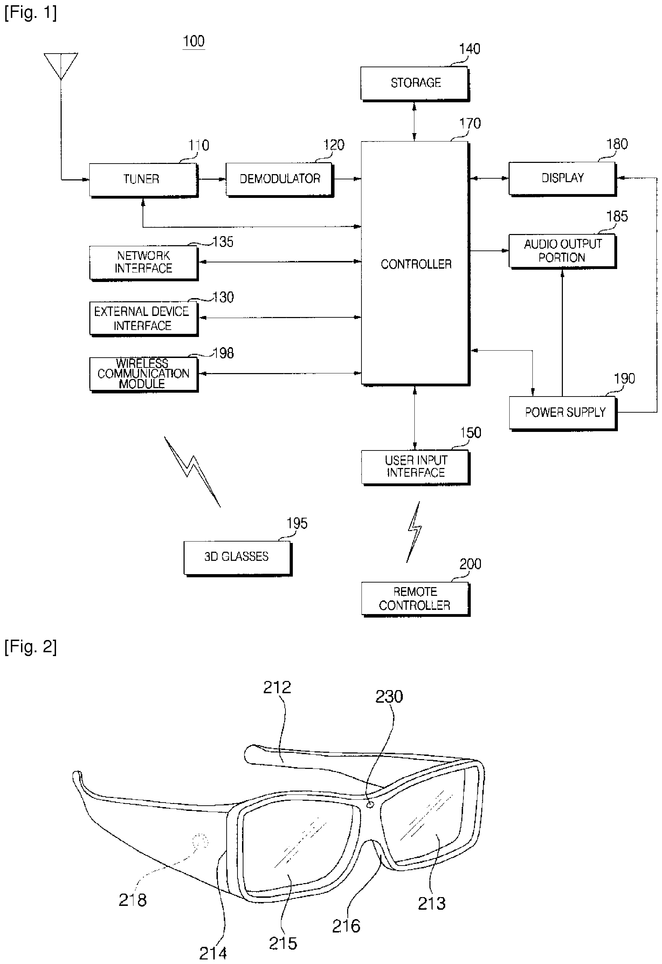

FIG. 1 is a block diagram of an image display apparatus according to an exemplary embodiment of the present invention.

Referring to FIG. 1, an image display apparatus 100 according to an exemplary embodiment of the present invention may include a tuner 110, a demodulator 120, an external device interface 130, a network interface 135, a storage 140, a user input interface 150, a controller 170, a display 180, an audio output portion 185, a power supply 190, three-dimensional (3D) glasses 195, and a wireless communication module 198.

The tuner 110 selects a Radio Frequency (RF) broadcast signal corresponding to a channel selected by a user from among a plurality of RF broadcast signals received through an antenna or an RF broadcast signal corresponding to each of pre-memorized channels, and downconverts the RF broadcast signal to a digital Intermediate Frequency (IF) signal or an analog baseband Audio/Video (A/V) signal.

More specifically, if the RF broadcast signal is a digital broadcast signal, the tuner 110 downconverts the RF broadcast signal to a digital IF signal, DIF. On the other hand, if the RF broadcast signal is an analog broadcast signal, the tuner 110 downconverts the RF broadcast signal to an analog baseband A/V signal, CVBS/SIF. That is, the tuner 110 may be a hybrid tuner capable of processing not only digital broadcast signals but also analog broadcast signals. The analog baseband A/V signal CVBS/SIF may be directly input to the controller 170.

The tuner 110 may be able to receive RF broadcast signals from an Advanced Television Systems Committee (ATSC) single-carrier system or from a Digital Video Broadcasting (DVB) multi-carrier system.

The tuner 110 may sequentially select RF broadcast signals corresponding to all broadcast channels previously memorized in the image display apparatus 100 by a channel-add function among from a plurality of RF signals received through the antenna, and may downconvert the selected RF broadcast signals to IF signals or baseband A/V signals.

The demodulator 120 receives the digital IF signal DIF from the tuner 110 and demodulates the digital IF signal DIF.

For example, if the digital IF signal DIF is an ATSC signal, the demodulator 120 performs 8-Vestigial SideBand (VSB) demodulation on the digital IF signal DIF. The demodulator 120 may also perform channel decoding. For the channel decoding, the demodulator 120 may include a Trellis decoder (not shown), a deinterleaver (not shown) and a Reed-Solomon decoder (not shown) and thus perform Trellis decoding, deinterleaving and Reed-Solomon decoding.

For example, if the digital IF signal DIF is a DVB signal, the demodulator 120 performs Coded Orthogonal Frequency Division Multiple Access (COFDMA) demodulation on the digital IF signal DIF. The demodulator 120 may also perform channel decoding. For the channel decoding, the demodulator 120 may include a convolution decoder (not shown), a deinterleaver (not shown), and a Reed-Solomon decoder (not shown) and thus perform convolutional decoding, deinterleaving, and Reed-Solomon decoding.

The demodulator 120 may perform demodulation and channel decoding on the digital IF signal DIF received from the tuner 110, thereby obtaining a stream signal TS. The stream signal TS may be a signal in which a video signal, an audio signal and a data signal are multiplexed. For example, the stream signal TS may be a Moving Picture Experts Group-2 (MPEG-2) Transport Stream (TS) signal obtained by multiplexing an MPEG-2 video signal and a Dolby AC-3 audio signal. The MPEG-2 TS signal may include a 4-byte header and a 184-byte payload.

In order to properly handle not only ATSC signals but also DVB signals, the demodulator 120 may include an ATSC demodulator and a DVB demodulator.

The stream signal TS may be input to the controller 170 and thus subjected to demultiplexing and A/V signal processing. The processed video and audio signals are output to the display 180 and the audio output portion 185, respectively.

The external device interface 130 may interface between an external device and the image display apparatus 100. For the interfacing, the external device interface 130 may include an A/V Input/Output (I/O) portion (not shown) or a wireless communication module (not shown).

The external device interface 130 may be connected wirelessly or wiredly to an external device such as a Digital Versatile Disc (DVD), a Blu-ray disc, a game player, a camera, a camcorder, or a computer (e.g. a laptop computer). Then, the external device interface 130 receives video, audio, and/or data signals from the external device and transmits the received external input signals to the controller 170. In addition, the external device interface 130 may output video, audio, and/or data signals processed by the controller 170 to the external device. In order to receive or transmit audio, video, and/or data signals from or to the external device, the external device interface 130 may include the A/V I/O portion (not shown) or the wireless communication module (not shown).

To provide the video and audio signals received from the external device to the image display apparatus 100, the A/V I/O portion may include a Universal Serial Bus (USB) port, a Composite Video Banking Sync (CVBS) port, a component port, a Super-video (S-video) (analog) port, a Digital Visual Interface (DVI) port, a High-Definition Multimedia Interface (HDMI) port, a Red-Green-Blue (RGB) port, and a D-sub port.

The wireless communication module of the external device interface 130 may perform short-range wireless communication with other electronic devices. For the short-range wireless communication over a network, the wireless communication module may operate in compliance with communication standards such as Bluetooth, Radio-Frequency IDentification (RFID), InfraRed Data Association (IrDA), Ultra WideBand (UWB), ZigBee, and Digital Living Network Alliance (DLNA).

The external device interface 130 may be connected to various set-top boxes through at least one of the USB port, the CVBS port, the component port, the S-video port, the DVI port, the HDMI port, the RGB port, and the D-sub port and may thus receive data from or transmit data to the various set-top boxes.

It is shown in FIG. 1 that the wireless communication module 198 transmits data to and receives data from the 3D glasses 195, which should not be construed as limiting the present invention. Hence, the external device interface 130 or the user input interface 150 may transmit data to and receive data from the 3D glasses 195.

The network interface 135 interfaces between the image display apparatus 100 and a wired/wireless network such as the Internet. The network interface 135 may include an Ethernet port for connection to a wired network. For connection to wireless networks, the network interface 135 may operate in conformance with communication standards such as Wireless Local Area Network (WLAN) (i.e. Wi-Fi), Wireless Broadband (WiBro), World Interoperability for Microwave Access (WiMax), and High Speed Downlink Packet Access (HSDPA).

The network interface 135 may receive contents or data from the Internet, a content provider, or a network provider over a network. The received contents or data may include contents such as movies, advertisements, games, Video-on-Demand (VoD) files, and broadcast signals, and information related to the contents. The network interface 135 may also receive update information and update files of firmware from the network operator. The network interface 135 may transmit data to the Internet, the content provider, or the network provider.

The network interface 135 may be connected to, for example, an Internet Protocol (IP) TV. To enable interactive communication, the network interface 135 may provide video, audio and/or data signals received from an IPTV set-top box to the controller 170 and provide signals processed by the controller 170 to the IPTV set-top box.

Depending on the types of transmission networks, the IPTV may refer to Asynchronous Digital Subscriber Line-TV (ADSL-TV), Very high data rate Digital Subscriber Line-TV (VDSL-TV), Fiber To The Home-TV (FTTH-TV), TV over DSL, Video over DSL, TV over IP (TVIP), Broadband TV (BTV), etc. In addition, the IPTV may cover Internet TV and full browsing TV in its meaning.

The storage 140 may store programs for processing and controlling signals by the controller 170, and may also store processed video, audio and/or data signals.

The storage 140 may temporarily store a video, audio and/or data signal received from the external device interface 130. The storage 140 may memorize broadcast channels by the channel-add function such as a channel map.

The storage 140 may include, for example, at least one of a flash memory-type storage medium, a hard disc-type storage medium, a multimedia card micro-type storage medium, a card-type memory (e.g. a Secure Digital (SD) or eXtreme Digital (XD) memory), a Random Access Memory (RAM), and a Read-Only Memory (ROM) such as Electrically Erasable and Programmable ROM (EEPROM). The image display apparatus 100 may play files stored in the storage 140 (e.g. video files, still image files, music files, and text files) for the user.

While the storage 140 is shown in FIG. 1 as configured separately from the controller 170, to which the present invention is not limited, the storage 140 may be incorporated into the controller 170, for example.

The user input interface 150 transmits a signal received from the user to the controller 170 or transmits a signal received from the controller 170 to the user.

For example, the user input interface 150 may receive various user input signals such as a power-on/off signal, a channel selection signal, and a screen setting signal from a remote controller 200 or may transmit a signal received from the controller 170 to the remote controller 200, according to various communication schemes, for example, RF communication and IR communication.

For example, the user input interface 150 may provide the controller 170 with user input signals or control signals received from local keys (not shown), such as inputs of a power key, a channel key, and a volume key, and setting values.

Also, the user input interface 150 may transmit a user input signal received from a sensor unit (not shown) that senses a user's gesture to the controller 170 or transmit a signal received from the controller 170 to the sensor unit. The sensor unit may include a touch sensor, a voice sensor, a position sensor, a motion sensor, etc.

The controller 170 may demultiplex the stream signal TS received from the tuner 110, the demodulator 120, or the external device interface 130 into a number of signals and process the demultiplexed signals so that the processed signals can be output as audio and video data.

The video signal processed by the controller 170 may be displayed as an image on the display 180. The video signal processed by the controller 170 may also be transmitted to an external output device through the external device interface 130.

The audio signal processed by the controller 170 may be output audibly to the audio output portion 185. Also, the audio signal processed by the controller 170 may be transmitted to the external output device through the external device interface 130.

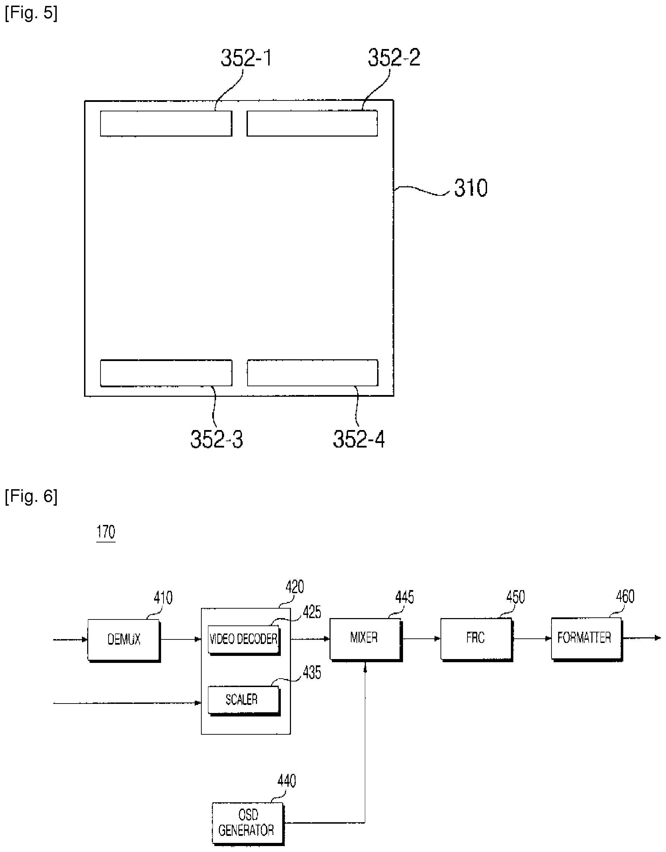

While not shown in FIG. 1, the controller 170 may include a demultiplexer and a video processor, which will be described later with reference to FIG. 6.

Besides, the controller 170 may provide overall control to the image display apparatus 100. For example, the controller 170 may control the tuner 110 to tune RF broadcasting corresponding to a user-selected channel or a pre-memorized channel.

The controller 170 may control the image display apparatus 100 according to a user command received through the user input interface 150 or according to an internal program. For example, the controller 170 controls the tuner 110 to receive a channel selected according to a specific channel selection command received through the user input interface 150 and processes a video, audio and/or data signal of the selected channel. The controller 170 outputs the processed video or audio signal along with information about the user-selected channel to the display 180 or the audio output portion 185.

In another example, the controller 170 outputs a video or audio signal received from an external device such as a camera or a camcorder through the external device interface 130 to the display 180 or the audio output portion 185 according to an external device video play command received through the external device interface 150.

The controller 170 may control the display 180 to display images. For instance, the controller 170 may control the display 180 to display a broadcast image received from the tuner 110, an external input image received through the external device interface 130, an image received through the network interface 130, or an image stored in the storage 140.

The image displayed on the display 180 may be a two-dimensional (2D) or 3D still image or moving picture.

The controller 170 controls a particular object in the image displayed on the display 180 to be rendered as a 3D object. For example, the particular object may be at least one of a linked Web page (e.g. from a newspaper, a magazine, etc.), an Electronic Program Guide (EPG), a menu, a widget, an icon, a still image, a moving picture, and text.

This 3D object may be processed to have a different depth from the image displayed on the display 180. Preferably, the 3D object may appear protruding relative to the image displayed on the display 180.

The controller 170 may locate the user based on an image captured by a camera unit (not shown). Specifically, the controller 170 may measure the distance (z-axis coordinates) between the user and the image display apparatus 100. In addition, the controller 170 may calculate x-axis and y-axis coordinates corresponding to the position of the user on the display 180.

The image display apparatus 100 may further include a channel browsing processor (not shown) for generating thumbnail images corresponding to channel signals or external input signals. The channel browsing processor may extract some of the video frames of each of stream signals TS received from the demodulator 120 or stream signals received from the external device interface 130 and display the extracted video frames on the display 180 as thumbnail images. The thumbnail images may be output to the controller 170 after they are encoded or without any processing. Also, it is possible to encode the thumbnail images into a stream and output the stream to the controller 170. The controller 170 may display a thumbnail list including a plurality of received thumbnail images on the display 180. The thumbnail list may be displayed in a part of the display 180 with an image displayed on the display 180, that is, as a compact view, or the thumbnail list may occupy almost all area of the display 180 as a full view. Thumbnail images may be sequentially updated in the thumbnail list

The display 180 generates driving signals by changing a processed video signal, a processed data signal, an On Screen Display (OSD) signal, and a control signal received from the controller 170 or a video signal, a data signal, and a control signal received from the external device interface 130.

The display 180 may be implemented into various types of displays such as a Plasma Display Panel (PDP), a Liquid Crystal Display (LCD), an Organic Light Emitting Diode (OLED), and a flexible display. Preferably, the display 180 is configured as a 3D display according to an exemplary embodiment of the present invention.

For 3D visualization, the display 180 may be configured into an auto-stereoscopic 3D display (glasses-free) or a traditional stereoscopic 3D display (with glasses).

Auto-stereoscopy is any method of displaying 3D images without any additional display, for example, special glasses on the part of a user. Thus, the display 180 displays 3D images on its own. Renticular and parallax barrier are examples of auto-stereoscopic 3D imaging.

The traditional stereoscopy requires an additional display besides the display 180 in order to display 3D images. The additional display may be a Head Mount Display (HMD) type, a glasses type, etc. As special 3D glasses, polarized glasses operate in a passive manner, whereas shutter glasses operate in an active manner. Also, HMD types may be categorized into passive ones and active ones.

According to an exemplary embodiment of the present invention, the 3D glasses 195 are used for viewing 3D images. The 3D glasses 195 correspond to the above-described additional display. The 3D glasses 195 may be, but not limited to, active shutter glasses. Passive polarized glasses are also available as the 3D glasses 195. The 3D glasses 195 may also include an HMD type in its concept. The following description will be made mainly in the context of the 3D glasses 195 being shutter glasses.

The display 180 may also be implemented as a touch screen so that it is used not only as an output device but also as an input device.

The audio output portion 185 may receive a processed audio signal (e.g. a stereo signal, a 3.1-channel signal or a 5.1-channel signal) from the controller 170 and output the received audio signal as voice. The audio output portion 185 may be implemented into various types of speakers.

To sense a user's gesture, the image display apparatus 100 may further include the sensor unit (not shown) that has at least one of a touch sensor, a voice sensor, a position sensor, and a motion sensor, as stated before. A signal sensed by the sensor unit may be output to the controller 170 through the user input interface 150.

The controller 170 may sense a user's gesture from an image captured by the camera unit or a signal sensed by the sensor unit, or by combining the captured image and the sensed signal.

The power supply 190 supplies power to the whole image display apparatus 100, particularly to the controller 170 that may be configured into a System On Chip (SOC), the display 180 for displaying images, and the audio output portion 185 for outputting audio data.

The wireless communication module 198 transmits data to and receives data from the 3D glasses 195. In accordance with the exemplary embodiment of the present invention, the 3D glasses 195 include at least one sensor unit and the wireless communication module 198 receives a glasses-wearing/no wearing sensing signal indicating whether or not the user wears the 3D glasses 195 from the 3D glasses 195.

The wireless communication module 198 may transmit a synchronization signal to the 3D glasses 195. For example, if the 3D glasses 195 are shutter glasses, the wireless communication module 198 may transmit a synchronization signal such that the left and right lenses of the shutter glasses are opened in synchronization with left-eye and right-eye images alternately displayed on the display 180.

The remote controller 200 transmits a user input to the user input interface 150. For the transmission of a user input, the remote controller 200 may operate based on various communication standards such as Bluetooth, RF, IR, UWB and ZigBee. In addition, the remote controller 200 may receive a video signal, audio signal and/or data signal from the user input interface 150 and output the received signal visually or audibly.

The above-described image display apparatus 100 may be a fixed digital broadcast receiver capable of receiving at least one of ATSC (8-VSB) broadcast programs, DVB-T (COFDM) broadcast programs, and ISDB-T (BST-OFDM) broadcast programs. Alternatively, the image display apparatus 100 may be a mobile digital broadcast receiver capable of at least one of terrestrial DMB broadcast programs, satellite DMB broadcast programs, ATSC-M/H broadcast programs, DVB-H (COFDM) broadcast programs, and Media Forward Link Only (MediaFLO) broadcast programs, or a mobile digital broadcast receiver capable of receiving cable, satellite and/or IPTV broadcast programs.

The image display apparatus 100 as set forth herein may be any of a TV receiver, a mobile phone, a smart phone, a laptop computer, a digital broadcasting terminal, a Personal Digital Assistant (PDA), a Portable Multimedia Player (PMP), etc.

The block diagram of the image display apparatus 100 illustrated in FIG. 1 is an exemplary embodiment of the present invention. Depending on the specification of the image display apparatus 100 in real implementation, the components of the image display apparatus 100 may be incorporated, added or omitted. That is, two or more components are incorporated into one component or one component may be configured as separate components, when needed. In addition, the function of each block is described for the purpose of describing the exemplary embodiment of the present invention and thus specific operations or devices should not be construed as limiting the scope of the present invention.

The following description is made with the appreciation that the image display apparatus 100 is capable of displaying 3D images and it is an LCD panel-based display with a backlight unit.

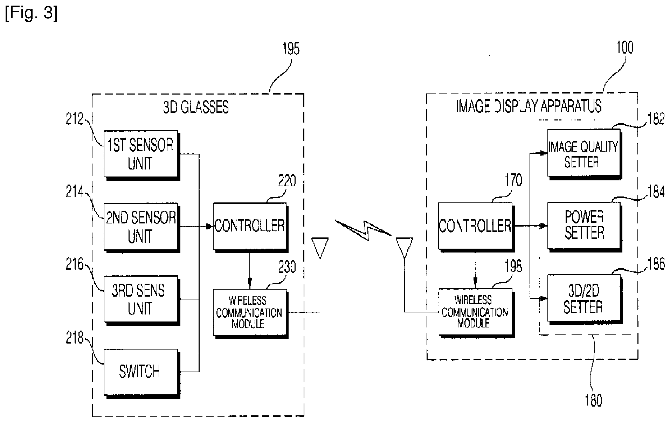

FIG. 2 illustrates an example of the 3D glasses illustrated in FIG. 1 and FIG. 3 is a block diagram of the 3D glasses and the image display apparatus illustrated in FIG. 1.

Referring to FIGS. 2 and 3, the 3D glasses 195 may include a first sensor unit 212, a second sensor unit 214, a third sensor unit 216, a switch 218, a controller 200, and a wireless communication module 230. The 3D glasses 195 have a left lens 213 and a right lens 215.

The first sensor unit 212 senses pressure when the user puts on or takes off the 3D glasses 195. For the pressure detection, the first sensor unit 212 may include a pressure sensor at a leg of the 3D glasses 195. When the user puts on the 3D glasses 195, the first sensor unit 212 is brought into close contact with the user and thus senses that the user puts on the glasses 195. If the user takes off the 3D glasses 915, the first sensor unit 212 is removed from the user and thus senses that the user takes off the glasses 195.

The second sensor unit 214 senses unfolding or folding of the 3D glasses 195 when the user puts on or takes off the 3D glasses 195. To sense the unfolding or folding, the second sensor unit 214 may have a sensor for sensing whether a leg of the 3D glasses 195 is unfolded from or folded on a lens of the 3D glasses 195. This sensor may be a mechanical or electrical one.

For example, if the user unfolds the legs of the 3D glasses 195 to put on the 3D glasses 195, the folding sensor may sense that the user puts on the 3D glasses 195 by sensing the unfolding. If the user takes off the 3D glasses 195 and folds them, the folding sensor may sense that the 3D glasses 195 are removed from the user by sensing the folding.

The third sensor unit 216 senses a resistance or capacitance value on a contact surface when the user puts on or takes off the 3D glasses 195. Alternatively or additionally, the third sensor unit 216 may sense pressure when the user puts on or takes off the 3D glasses 195. For sensing resistance, capacitance, or pressure, the third sensor unit 216 may include a resistance sensor, a capacitor sensor, or a pressure sensor at a portion of the 3D glasses 195 that is brought into contact with the bridge of the nose of the user when the user puts on the 3D glasses 195. When the user puts on the 3D glasses 195, the nose of the user closely contacts the third sensor unit 216. Thus, the third sensor unit 216 may sense that the user puts on the 3D glasses 195.

For example, when the user puts on the 3D glasses 195, a change occurs in resistance or capacitance, compared to when the user takes off the 3D glasses 195. The third sensor unit 216 determines that the user puts on the 3D glasses 195 by sensing the resistance or capacitance change. If the third sensor unit 216 is provided with a pressure sensor, when the user puts on the 3D glasses 195, it may detect the user's putting on the 3D glasses 195 by sensing the contact between the user and the 3D glasses 195. If the user takes off the 3D glasses 195, the third sensor unit 216 is removed from the user and thus senses that the user takes off the 3D glasses 195.

In the case where the first and third sensor units 212 and 216 each are provided with a pressure sensor and thus a plurality of pressure sensors are used despite their different positions, an accurate decision may be made as to whether the user wears the 3D glasses 195 or not.

If the 3D glasses 195 are shutter glasses, the switch 218 switches on power to or switches off power from the shutter glasses or enable or disable the shutter glasses, according to a user operation. If the 3D glasses 195 are polarized glasses, the switch 218 may enable or disable the polarized glasses according to a user operation.

The controller 220 may determine whether the user wears the 3D glasses 195 or not through at least one of the first, second and third sensor units 212, 214 and 216, or through the switch 218, and transmit a glasses-wearing/no wearing sensing signal indicating whether the user wears the 3D glasses 195 or not to the wireless communication module 230, to thereby control the wireless communication module 230 to communicate wirelessly with the image display apparatus 100.

When the 3D glasses 195 are shutter glasses, the controller 220 may control the left and right lenses of the shutter glasses to open or shut in synchronization with left-eye and right-eye images displayed on the display 180 of the image display apparatus 100.

Meanwhile, when determining that the user does not wear the 3D glasses 195, the controller 220 may control the wireless communication module 230 not to operate. For example, if the controller 220 determines that the user does not wear the 3D glasses 195, it may control a power supply (not shown) of the 3D glasses 195 to cut off power from the wireless communication module 230. Therefore, the consumption power of the 3D glasses 195 can be efficiently managed.

The wireless communication module 230 transmits the glasses-wearing/no wearing sensing signal received from the controller 220 to the wireless communication module 198 of the image display apparatus 100 by IR or RF communication. If the 3D glasses 195 are shutter glasses, the wireless communication module 230 may further receive a synchronization signal from the wireless communication module 198 of the image display apparatus 100.

The image display apparatus 100 may include the wireless communication module 198, the controller 170, and the display 180. Particularly, the display 180 may have an image quality setter 182, a power setter 184, and a 3D/2D setter 186.

In the image display apparatus 100, the wireless communication module 198 transmits data to and receives data from the 3D glasses 195. In accordance with the exemplary embodiment of the present invention, the wireless communication module 198 receives the glasses-wearing/no wearing sensing signal from the 3D glasses 195 with at least one sensor unit.

As described above, the wireless communication module 198 may transmit the synchronization signal to the 3D glasses 195. For example, if the 3D glasses 195 are shutter glasses, the wireless communication module 198 may transmit the synchronization signal to the shutter glasses such that the left and right lenses of the shutter glasses are open or shut in synchronization with left-eye and right-eye images alternately displayed on the display 180 according to the synchronization signal.

The controller 170 may control conversion between a 2D image and a 3D image on the display 180 according to the glasses-wearing/no wearing sensing signal received from the wireless communication module 198.

For 3D imaging, the controller 170 may set at least one of luminance, color, contrast, and power to be different from 2D imaging.

If the display 180 is provided with a plurality of backlight lamps on the rear surface of its display panel, the controller 170 may control less current per unit frame to flow through the backlight lamps for 3D imaging than for 2D imaging.

Also, if the display 180 is provided with a plurality of backlight lamps on the rear surface of its display panel, the controller 170 may control current to flow through the backlight lamps at a higher level for 3D imaging than for 2D imaging.

Instead of the controller 170, any other component may take charge of the functions of converting a 2D image to a 3D image and vice versa and controlling luminance, color, contrast and/or power during the conversion between 2D and 3D images.

Meanwhile, upon receipt of a glasses-no wearing sensing signal from the wireless communication module 198, the controller 170 may control 2D-to-3D conversion not to be performed, which will be described later with reference to FIG. 6.

From among the components of the image display apparatus 100, the image quality setter 182, the power setter 184, and the 3D/2D setter 186 are separately shown in FIG. 3.

The image quality setter 182 may differentiate 2D imaging from 3D imaging in at least one of luminance, color, and contrast.

For example, when a 3D image is displayed, the image quality setter 182 may optimize 3D imaging by controlling brightness, color reproduction, luminance, color, and/or contrast.

The power setter 184 may set different consumption power levels for a 2D image and a 3D image based on the glasses-wearing/no wearing signal.

For example, in the case where the display 180 is provided, at the rear surface of its display panel, with a plurality of backlight lamps, the power setter 180 may control current to flow at a higher level for 3D imaging than for 2D imaging.

When the user views 3D images with the 3D glasses 195 on, an optimum luminance for the 3D images is provided to the user by increasing the level of current or brightness. On the other hand, if the user does not wear the 3D glasses 195, he or she may not view normal 3D images on the display 180. Therefore, unnecessary power consumption is reduced by decreasing the level of current or brightness.

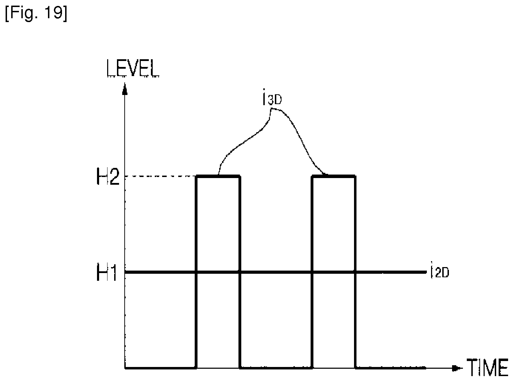

On the other hand, less current per unit frame may flow through the backlight lamps to display a 3D image than a 2D image, which will be described later with reference to FIG. 19.

The 3D/2D setter 186 may perform an image signal process for 2D or 3D imaging. The 3D/2D setter 186 may process a 2D or 3D video signal (RGB data signal) received from the controller 170.

The image quality setter 182, the power setter 184, and the 3D/2D setter 186 may reside within the display 180, which should not be construed as limiting the scope and spirit of the present invention. Therefore, they may be separately configured outside the display 180.

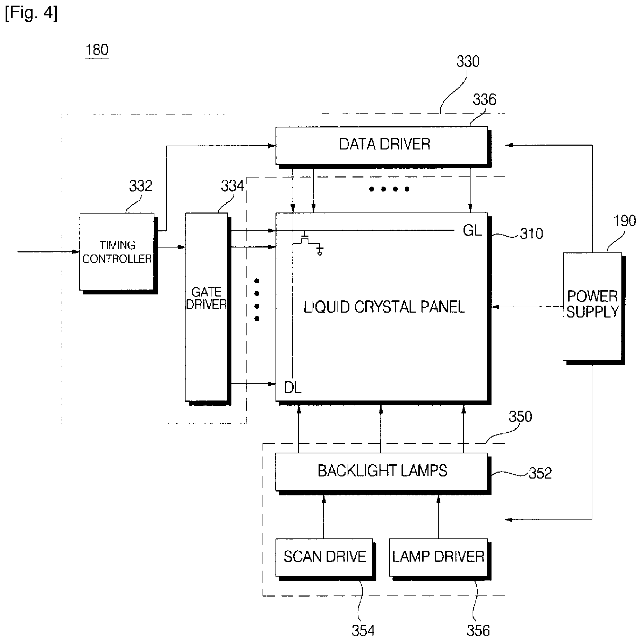

FIG. 4 is a block diagram of the power supply and the display illustrated in FIG. 1.

Referring to FIG. 4, the LCD panel-based display 180 includes a liquid crystal panel 310, a driving circuit 330, and a backlight unit 350.

The liquid crystal panel 310 has a first substrate, a second substrate, and a liquid crystal layer between the first and second substrates. In the first substrate, a plurality of gate lines GL and data lines DL form a matrix, intersecting each other, and thin-film transistors and pixel electrodes connected to the thin-film transistors are provided at the intersections. Common electrodes are provided in the second substrate.

The driving circuit 330 drives the liquid crystal panel 310 according to control signals and data signals received from the controller 170 illustrated in FIG. 1. To drive the liquid crystal panel 310, the driving circuit 330 includes a timing controller 332, a gate driver 334, and a data driver 336.

The timing controller 332 receives a control signal, an RGB data signal, and a vertical synchronization signal Vsync from the controller 170, controls the gate driver 334 and the data driver 336 according to the control signal, re-arranges the RGB data signal, and provides the re-arranged RGB data signal to the data driver 336.

The gate driver 334 and the data driver 336 provide a scan signal and a video signal to the liquid crystal panel 310 through the gate lines GL and the data lines DL under the control of the timing controller 332.

The backlight unit 350 illuminates the liquid crystal panel 310. Thus the backlight unit 350 may include a plurality of backlight lamps 352 as light sources, a scan driver 354 for controlling the scanning driving of the backlight lamps 352, and a lamp driver 356 for turning on or off the backlight lamps 352.

An image is displayed by light emitted from the backlight unit 350, with the light transmittance of the liquid crystal layer controlled by the electrical field between the pixel electrodes and the common electrodes of the liquid crystal panel 310.

The power supply 190 may supply a common electrode voltage Vcom to the liquid crystal panel 310 and a gamma voltage to the data driver 336. In addition, the power supply 190 supplies a driving voltage to the backlight unit 350 in order to drive the backlight lamps 352.

FIG. 5 illustrates an exemplary layout of the backlight lamps illustrated in FIG. 4.

Referring to FIG. 5, in the image display apparatus 100 according to the exemplary embodiment of the present invention, the display 180 may include the liquid crystal panel 310 and a plurality of backlight lamps 352-1 to 352-4. The backlight lamps 352-1 to 352-4 may be LEDs.

The plurality of backlight lamps 352-1 to 352-4 are arranged on the rear surface of the liquid crystal panel 310, especially in upper and lower parts of the rear surface of the liquid crystal panel 310. When the backlight lamps 352-1 to 352-4 are turned on, light is projected onto the frontal surface of the liquid crystal panel 310 by a diffuser sheet for diffusing incident light from the backlight lamps 352-1 to 352-4, a reflection sheet for reflecting the light, and an optical sheet for polarizing, scattering, and diffusing the light. A display with this layout of backlight lamps is called an edge type.

Unlike the layout illustrated in FIG. 5, the backlight lamps 352-1 to 352-4 may be arranged in one of the upper and lower parts of the liquid crystal panel 310. Further, the number of backlight lamps arranged in each of the upper and lower parts of the liquid crystal panel 310 may be changed. It is also possible to arrange the backlight lamps 352-1 to 352-4 in a row in the upper and lower parts of the liquid crystal panel 310.

Compared to the edge type, the plurality of backlight lamps 352-1 to 352-4 may be arranged uniformly across the rear surface of the liquid crystal panel 310. A display with this backlight layout is called a direct type.

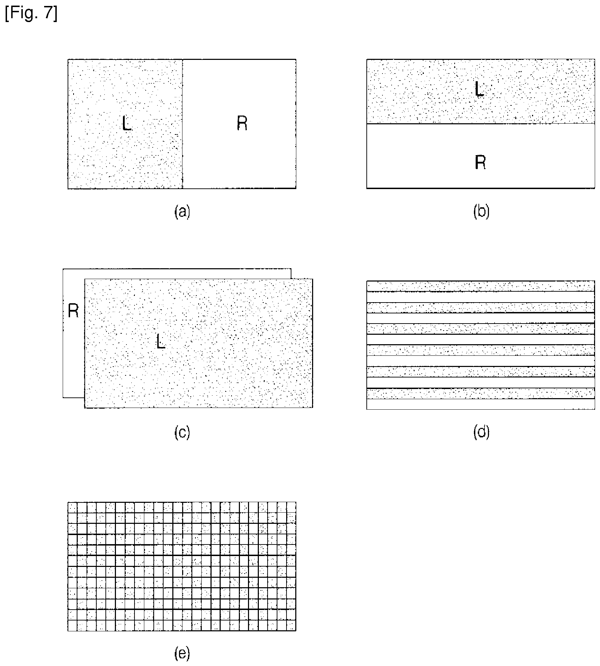

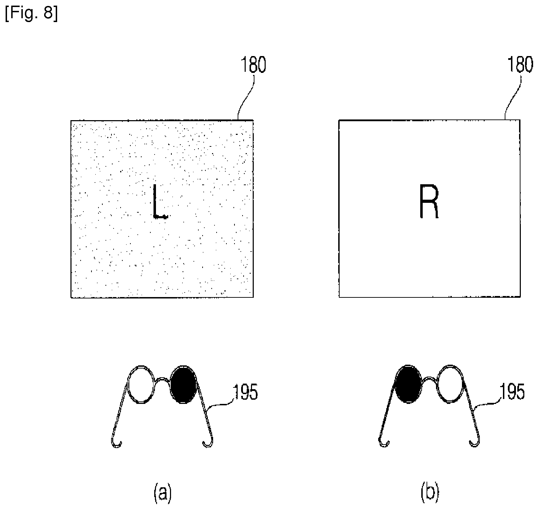

FIG. 6 is a block diagram of the controller illustrated in FIG. 1, FIGS. 7A to 5E illustrate 3D formats, and FIGS. 8A and 8B illustrate operations of the 3D glasses according to 3D formats illustrated in FIGS. 7A to 7E.

Referring to FIG. 6, the controller 170 may include a Demultiplexer (DEMUX) 410, a video processor 420, an OSD generator 440, a mixer 445, a Frame Rate Converter (FRC) 450, and a formatter 460 according to an exemplary embodiment of the present invention. The controller 170 may further include an audio processor (not shown) and a data processor (not shown).

The DEMUX 410 demultiplexes an input stream. For example, the DEMUX 410 may demultiplex an MPEG-2 TS into a video signal, an audio signal, and a data signal. The input stream signal may be received from the tuner 110, the demodulator 120 or the external device interface 130.

The video processor 420 may process the demultiplexed video signal. For the video signal processing, the video processor 420 may include a video decoder 425 and a scaler 435.

The video decoder 425 decodes the demultiplexed video signal and the scaler 435 scales the resolution of the decoded video signal so that the video signal can be displayed on the display 180.

The video decoder 425 may be provided with decoders that operate based on various standards.

If the demultiplexed video signal is a MPEG-2 coded 2D video signal, the video signal may be decoded by an MPEG-2 decoder.

If the demultiplexed video signal is, for example, an H.264-encoded DMB or DVB-handheld (DVB-H) signal, the video signal may be decoded by an H.264 decoder. If the video signal is an MPEC-C part 3 depth video signal, a Multi-view Video Coding (MVC) video signal, or a Free-viewpoint TV (FTV) video signal, the video signal may be decoded by an MPEC-C decoder, an MVC decoder, or an FTV decoder.

The decoded video signal processed by the video processor 420 may be a 2D video signal, a 3D video signal, or a combination of both.

The video processor 420 may determine whether the demultiplexed video signal is a 2D or 3D video signal. For example, a broadcast signal received from the tuner 110, an external input signal received from an external device, or an external input signal received over a network may be a 3D video signal. The video processor 420 may determine whether an input stream is a 3D video signal, referring to a 3D flag set in the header of the stream, 3D metadata of the stream, or 3D format information about the stream.

The decoded video signal from the video processor 220 may have any of various available formats. For example, the decoded video signal may be a 3D video signal with a color image and a depth image or a 3D video signal with multi-viewpoint image signals. The multi-viewpoint image signals may include, for example, a left-eye image signal and a right-eye image signal.

For 3D visualization, 3D formats illustrated in FIGS. 7A to 7E are available. The 3D formats are a side-by-side format (FIG. 7A), a top/down format (FIG. 7B), a frame sequential format (FIG. 7C), an interlaced format (FIG. 7D), and a checker box format (FIG. 7E). A left-eye image L and a right-eye image R are arranged side by side in the side by side format. The left-eye image L and the right-eye image R are stacked vertically in the top/down format, while they are arranged in time division in the frame sequential format. In the interlaced format, the left-eye image L and the right-eye image R alternate line by line. The left-eye image L and the right-eye image R are mixed on a box basis in the checker box format.

The OSD generator 440 generates an OSD signal on its own or according to a user input. For example, the OSD generator 440 may generate signals by which a variety of information is displayed as graphic images or text on the display 180, according to user input signals or control signals. The OSD signal may include various data such as a User Interface (UI) screen, a variety of menu screens, widgets, icons, etc. Also, the OSD signal may include a 2D object and/or a 3D object.

The mixer 445 may mix the decoded video signal processed by the video processor 420 with the OSD signal generated from the OSD generator 440. The OSD signal and the decoded video signal each may include at least one of a 2D signal and a 3D signal.

The FRC 450 may change the frame rate of the mixed video signal received from the mixer 445. For example, a frame rate of 60Hz is converted to a frame rate of 120 or 240Hz. When the frame rate is changed from 60Hz to 120Hz, the same first frame is inserted between a first frame and a second frame, or a predicted third frame is inserted between the first and second frames. If the frame rate is changed from 60Hz to 240Hz, three identical frames or three predicted frames are inserted between the first and second frames.

It is also possible to maintain the frame rate of the input image without frame rate conversion. Preferably, when the FRC 450 receives a 2D video signal, it may output the 2D video signal without frame rate conversion. On the other hand, when the FRC 450 receives a 3D video signal, it may change the frame rate of the 3D video signal in the above-described manner.

The formatter 460 may separate a 2D video signal and a 3D video signal from the mixed video signal of the OSD signal and the decoded video signal received from the mixer 445.

Herein, a 3D video signal refers to a signal including a 3D object such as a Picture-In-Picture (PIP) image (still or moving), an EPG that describes broadcast programs, a menu, a widget, text, an object within an image, a figure, a background, or a Web page (e.g. from a newspaper, a magazine, etc.).

The formatter 460 may change the format of the 3D video signal, for example, to one of the 3D formats illustrated in FIGS. 7A to 7E irrespective of the format of the 3D video signal. Accordingly, the 3D glasses 195 may operate according to the changed 3D format as illustrated in FIGS. 8A and 8B.

FIG. 8A illustrates an exemplary operation of the 3D glasses 195, especially in case of shutter glasses, when the formatter 460 outputs a 3D video signal in the frame sequential format illustrated in FIG. 7C.

When the left-eye image L is displayed on the display 180, the left lens is open and the right lens is shut off in the shutter glasses 195. When the right-eye image R is displayed on the display 180, the left lens is shut off and the right lens is open in the shutter glasses 195.

FIG. 8B illustrates another exemplary operation of the 3D glasses 195, especially in case of polarized glasses, when the formatter 460 outputs a 3D video signal in the side-by-side format illustrated in FIG. 7A. The polarized glasses 195 are passive ones, with both lenses kept open.

Meanwhile, the formatter 460 may convert a 2D video signal to a 3D video signal. For example, the formatter 460 may detect edges or a selectable object from the 2D video signal and generate a 3D video signal with an object based on the detected edges or the selectable object. As described before, the 3D video signal may be separated into left-eye and right-eye image signals L and R.

Upon receipt of a glasses-no wearing sensing signal from the wireless communication module 198, the controller 170 may control the formatter 460 not to operate. For instance, when determining that the user does not wear the 3D glasses 195, the controller 170 may control the power supply 190 to cut off power from the formatter 460 so that the formatter 460 does not operate. Consequently, 2D-to-3D conversion does not take place in the formatter 460 and thus a 2D image is still displayed on the display 180.

The audio processor (not shown) of the controller 170 may process the demultiplexed audio signal. For the audio signal processing, the audio processor may have a plurality of decoders.

If the demultiplexed audio signal is a coded audio signal, the audio processor of the controller 170 may decode the audio signal. For example, if the demultiplexed audio signal is an MPEG-2 coded audio signal, it may be decoded by an MPEG-2 decoder. If the demultiplexed audio signal is an MPEG-4 Bit Sliced Arithmetic Coding (BSAC) coded audio signal for terrestrial DMB, it may be decoded by an MPEG-4 decoder. If the demultiplexed audio signal is an MPEG-2-Advanced Audio Coding (AAC) coded audio signal for satellite DMB or DVB-H, it may be decoded by an AAC decoder. If the demultiplexed audio signal is a Dolby AC-3 coded audio signal, it may be decoded by an AC-3 decoder.

The audio processor of the controller 170 may also adjust the base, treble, and volume of the audio signal.

The data processor (not shown) of the controller 170 may process the data signal obtained by demultiplexing the input stream signal. For example, if the data signal is a coded signal such as an EPG which includes broadcast information specifying the start time, end time, etc. of scheduled broadcast TV or radio programs, the controller 170 may decode the data signal. Examples of an EPG include ATSC-Program and System Information Protocol (PSIP) information and DVB-Service Information (SI). ATSC-PSIP information or DVB-SI information may be included in the header of a TS, i.e., a 4-byte header of an MPEG-2 TS.

While it is shown in FIG. 6 that the mixer 445 mixes signals received from the OSD generator 440 and the video processor 420 and then the formatter 460 performs 3D processing on the mixed signal, to which the present invention is not limited, the mixer 445 may reside after the formatter 460. Thus the formatter 460 may perform 3D processing on a signal received from the video processor 420, the OSD generator 440 may generate an OSD signal and subject the OSD signal to 3D processing, and then the mixer 445 may mix the processed 3D signals received from the formatter 460 and the OSD generator 440.

The block diagram of the controller 170 illustrated in FIG. 6 is an exemplary embodiment of the present invention. Depending on the specification of the controller 170 in real implementation, the components of the controller 170 may be incorporated, omitted, or added with a new component.

Especially, the FRC 450 and the formatter 460 may be configured separately outside the controller 170.

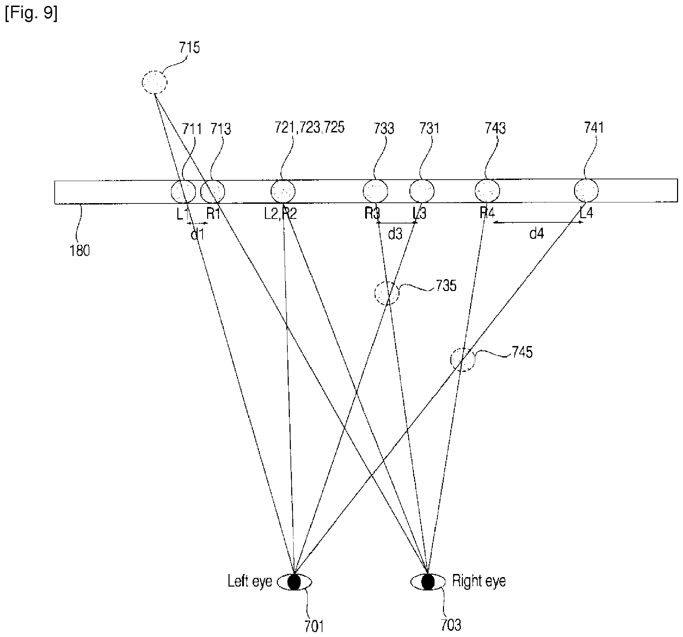

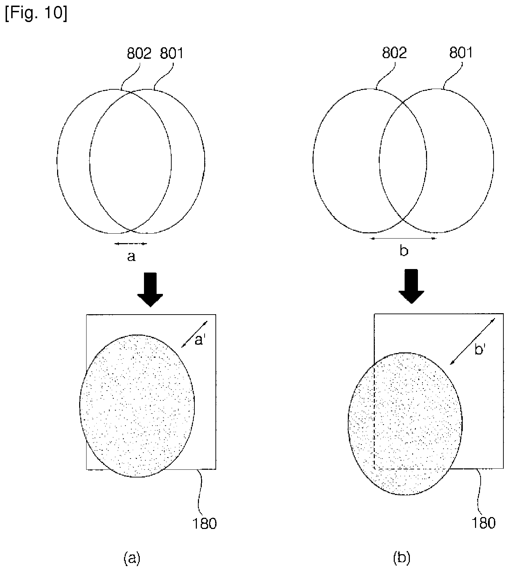

FIG. 9 illustrates formation of 3D images by combining left-eye and right-eye images, and FIGS. 10A and 10B illustrate different depth illusions according to different disparities between a left-eye image and a right-eye image.

Referring to FIG. 9, there are a plurality of images or objects 715, 725, 735 and 745. A first object 715 is created by combining a first left-eye image 711 (L1) based on a first left-eye image signal with a first right-eye image 713 (R1) based on a first right-eye image signal, with a disparity d1 between the first left-eye and right-eye images 711 and 713. The user sees an image as formed at the intersection between a line connecting a left eye 701 to the first left-eye image 711 and a line connecting a right eye 703 to the first right-eye image 713. Therefore, the user is tricked into perceiving the first object 715 as behind the display 180.

As a second object 725 is created by overlapping a second left-eye image 721 (L2) with a second right-eye image 723 (R2) on the display 180, thus with a disparity of 0 between the second left-eye and right-eye images 721 and 723. Thus, the user perceives the second object 725 as on the display 180.

A third object 735 is created by combining a third left-eye image 731 (L3) with a third right-eye image 733 (R3), with a disparity d3 between the third left-eye and right-eye images 731 and 733. A fourth object 745 is created by combining a fourth left-eye image 741 (L4) with a fourth right-eye image 743 (R4), with a disparity d4 between the fourth left-eye and right-eye images 741 and 743.

The user perceives the third and fourth objects 735 and 745 at image-formed positions, that is, as being positioned before the display 180.

Because the disparity d4 between the fourth left-eye and right-eye images 741 and 743 is larger than the disparity d3 between the third left-eye and right-eye images 731 and 733, the fourth object 745 appears more protruding than the third object 735.

In exemplary embodiments of the present invention, the distances between the display 180 and the objects 715, 725, 735 and 745 are represented as depths. When an object is perceived to the user as being positioned behind the display 180, the depth of the object is negative-signed. On the other hand, when an object is perceived to the user as being positioned before the display 180, the depth of the object is positive-signed. Therefore, as an object appears more protruding to the user, it is deeper, that is, its depth is larger.

Referring to FIGS. 10A and 10B, the disparity a between a left-eye image 801 and a right-eye image 802 in FIG. 10A is smaller than the disparity b between the left-eye image 801 and the right-eye image 802 in FIG. 10B. Consequently, the depth a' of a 3D object created in FIG. 10A is smaller than the depth b' of a 3D object created in FIG. 10B.

In the case where a left-eye image and a right-eye image are combined to a 3D image, if the left-eye and right-eye images of 3D images are apart from each other by different disparities, the 3D images are perceived to the user as formed at different positions. This means that the depth of a 3D image or 3D object formed by a left-eye image and a right-eye image in combination may be controlled by adjusting the disparity of the left-eye and right-eye images.

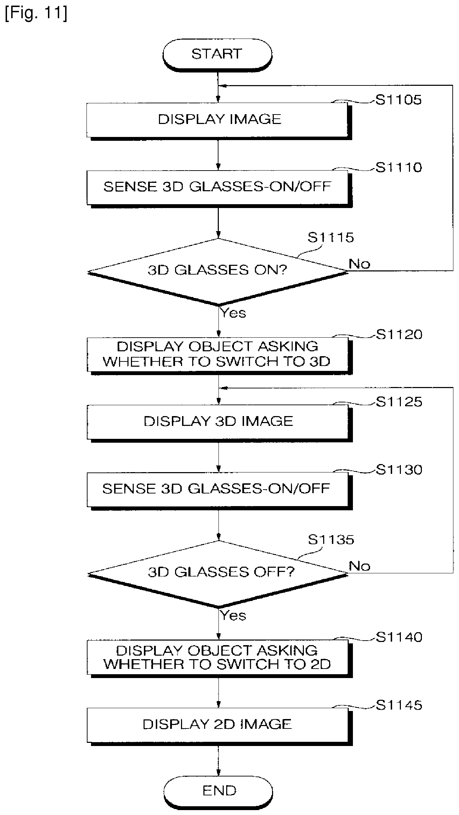

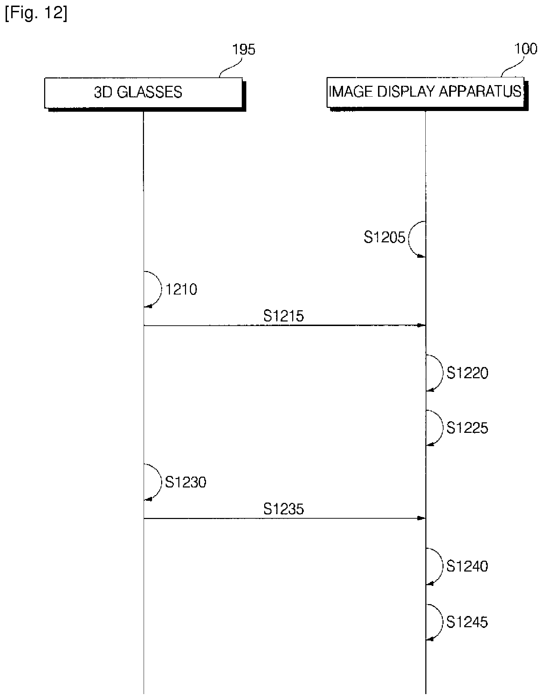

FIG. 11 is a flowchart illustrating a method for operating the image display apparatus according to an exemplary embodiment of the present invention, and FIGS. 12 to 19 are views referred to for describing the method for operating the image display apparatus, illustrated in FIG. 11.

Referring to FIG. 11, an image is displayed in step S1105. The displayed image may be an external input image received from an external device, an image received from a content provider over a network, a broadcast image corresponding to a broadcast signal received from the tuner, or an image stored in the storage 140. The image may be a 2D image.

In step S1110, 3D glasses-wearing/no wearing is sensed, that is, it is sensed whether the user wears the 3D glasses 195.

Specifically, the controller 170 may receive from the wireless communication module 198a glasses-wearing/no wearing sensing signal indicating whether the 3D glasses 195 are put on. As described before, the wireless communication module 198 communicates with the wireless communication module 230 of the 3D glasses 195.

At least one sensor unit of the 3D glasses 195 may sense whether the user has put on the 3D glasses 195.

For sensing 3D glasses-wearing/no wearing, the 3D glasses 195 may include the first sensor unit 212, the second sensor unit 214, the third sensor unit 216, the switch 218, the controller 220, and the wireless communication module 230, as described before with reference to FIGS. 2 and 3.

The first sensor 212 may sense pressure when the user puts on or takes off the 3D glasses 195. The first sensor 212 may be provided at a leg of the 3D glasses 195.

The second sensor unit 214 may sense unfolding or folding of the 3D glasses 195 when the user puts on or takes off the 3D glasses 195. The second sensor unit 214 may include a sensor for sensing folding or unfolding between a leg and a lens of the 3D glasses 195.

The third sensor unit 216 may sense a resistance or capacitance value on a contact surface, when the user puts on or takes off the 3D glasses 195. The third sensor unit 216 may be provided at a portion of the 3D glasses 195 that is brought into contact with the bridge of the nose of the user when the user puts on the 3D glasses.

The switch 218 may switch on power to or switches off power from the 3D glasses 195, or enable or disable the 3D glasses 195.

The controller 220 may determine whether the user has put on the 3D glasses 195 or not through at least one of the first, second and third sensor units 212, 214 and 216 or through the switch 218.

The wireless communication module 230 receives a glasses-wearing/no wearing sensing signal from the controller 220 and transmits the glasses-wearing/no wearing sensing signal to the wireless communication module 198 of the image display apparatus 100 by IR or RF communication.

In step S1115, it is determined whether the user wears the 3D glasses 195. If the user wears the 3D glasses 195, an object asking the user whether to switch to 3D is displayed in step S1120. This object may be a 2D or 3D object. When the user selects to switch to 3D, a 3D image is displayed on the display 180 in step S1125. On the other hand, the object asking the user whether to switch to 3D may not be displayed on the display 180. That is, step S1125 is optional. In this case, a 3D image is automatically displayed on the display 180 in step S1125.

Specifically, the controller 170 determines based on the received glasses-wearing/no wearing sensing signal whether the user wears the 3D glasses 195. When determining that the user wears the 3D glasses 195, the controller 170 controls the display 180 to display a 3D image.

For example, if the image displayed in step S1105 is a 2D image, the controller 170 controls a 3D version of the 2D image to be displayed by 2D-to-3D conversion.

The 2D-to-3D conversion may be carried out within the controller 170. To be more specific, the video processor 420 or the formatter 460 detects edges of an object from the 2D video signal, sets a depth for the object based on the detected edges, and creates a 3D image by arranging the 2D image as multi-viewpoint images (i.e. a left-eye image and a right-eye image) according to the depth. As the depth is larger, the left-eye image and the right-eye image may be arranged with a larger disparity in between.

If an image is input separately as a 2D version and a 3D version of the image and the controller 170 determines that the user wears the 3D glasses 195, the controller 170 replaces the 2D image with the 3D image on the display 180.

When determining that the user wears the 3D glasses 195, the controller 170 may control a 3D image of a different source from the on-going 2D image to be displayed.

For example, when it is determined that the user wears the 3D glasses 195 during playing a first broadcast channel that services 2D images on the display 180, the first broadcast channel may be automatically switched to a second broadcast channel that services 3D images.

In addition, when determining that the user wears the 3D glasses 195, the controller 170 may control an on-going 2D broadcast image to be replaced with an external 3D input image.

When determining that the user wears the 3D glasses 195, the controller 170 may control an external input of a 2D image to change to an external input of a 3D image. For example, the controller 170 may control 2D-to-3D conversion of an external input image received from an external device such as a DVD, a Blu-ray disc, or a game player through the external device interface 130 like an HDMI port. For this purpose, the controller 170 may control a 2D-to-3D switch signal to the external device through the external device interface 130.

It may be further contemplated that with a 3D video content list displayed, an object prompting the user to select a 3D content from the 3D video content list may be displayed.

In step S1130, it is sensed whether the user still wears the 3D glasses. With the 3D image displayed on the display 180, it may be sensed periodically whether the user wears the 3D glasses 195.

The controller 170 may receive a glasses-wearing/no wearing sensing signal through the wireless communication module 198. At least one sensor unit of the 3D glasses 195 may sense the 3D glasses-wearing/no wearing.

In step S1135, it is determined whether the user still wears the 3D glasses. If the user does not wear the 3D glasses, an object asking the user whether to switch to 2D is displayed in step S1140. This object may be a 2D or 3D object. When the user selects to switch to 2D, a 2D image is displayed on the display 180 in step S1145. On the other hand, the object asking the user whether to switch to 2D may not be displayed on the display 180. That is, step S1140 is optional. In this case, a 2D image is automatically displayed on the display 180 in step S1145.

Specifically, the controller 170 determines based on the received glasses-wearing/no wearing sensing signal whether the user still wears the 3D glasses 195. If determining that the user does not wear the 3D glasses 195, the controller 170 controls the display 180 to display a 2D image.

For example, the 3D image displayed in step S1125 is converted to a 2D image and displayed on the display 180. The 3D-to-2D conversion may be carried out in the controller 170.

If an image is input separately as 2D and 3D versions of the image and the controller 170 determines that the user does not wear the 3D glasses 195, the controller 170 replaces the 3D image with the 2D image on the display 180.

When determining that the user does not wear the 3D glasses 195, the controller 170 may control the on-going 3D image to be replaced with a 2D image of a different source on the display 180.

For example, when it is determined that the user does not wear the 3D glasses 195 during playing a second broadcast channel that services 3D images on the display 180, the second broadcast channel may be automatically switched to a first broadcast channel that services 2D images.

In addition, when determining that the user does not wear the 3D glasses 195, the controller 170 may control an on-going 3D external input image to be replaced with a 2D broadcast image.

When determining that the user does not wear the 3D glasses 195, the controller 170 may control an external input of a 3D image to change to an external input of a 2D image. For example, the controller 170 may control 3D-to-2D conversion of an external input image received from an external device such as a DVD, a Blu-ray disc, or a game player through the external device interface 130 like an HDMI port. For this purpose, the controller 170 may control a 3D-to-2D switch signal to the external device through the external device interface 130.

It may be further contemplated that with a 2D video content list displayed, an object prompting the user to select a 2D content from the 2D video content list may be displayed.

FIG. 12 is a diagram illustrating a signal flow between the 3D glasses 195 and the image display apparatus 100, particularly the controller 170 in the method for operating the image display apparatus 100 illustrated in FIG. 11.

Referring to FIG. 12, the controller 170 of the image display apparatus 100 controls a 2D image to be displayed on the display 180 in step S1205. Meanwhile, the controller 220 of the 3D glasses 195 determines whether the user wears the 3D glasses 195 through at least one of the sensor units 212, 214 and 216 or through the switch 218 in step S1210. If the controller 220 of the 3D glasses 195 determines that the user wears the 3D glasses 195, the wireless communication module 230 transmits a glasses-wearing sensing signal to the image display apparatus 100 in step S1215.

The controller 170 may control an object asking the user whether to switch to 3D to be displayed according to the glasses-wearing sensing signal in step S1220. If the user selects to switch to 3D, the controller 170 controls a 3D image to be displayed on the display 180 in step S1225.

In step S1230, the controller 220 of the 3D glasses 195 determines whether the user still wears the 3D glasses 195 through at least one of the sensor units 212, 214 and 216 or through the switch 218. If the controller 220 determines that the user does not wear the 3D glasses 195, the wireless communication module 230 of the 3D glasses 195 transmits a glasses-no wearing sensing signal to the image display apparatus 100 in step S1235.

The controller 170 may control an object asking the user whether to switch to 2D to be displayed according to the glasses-no wearing sensing signal in step S1240. If the user selects to switch to 2D, the controller 170 controls a 3D image to be displayed on the display 180 in step S1245.

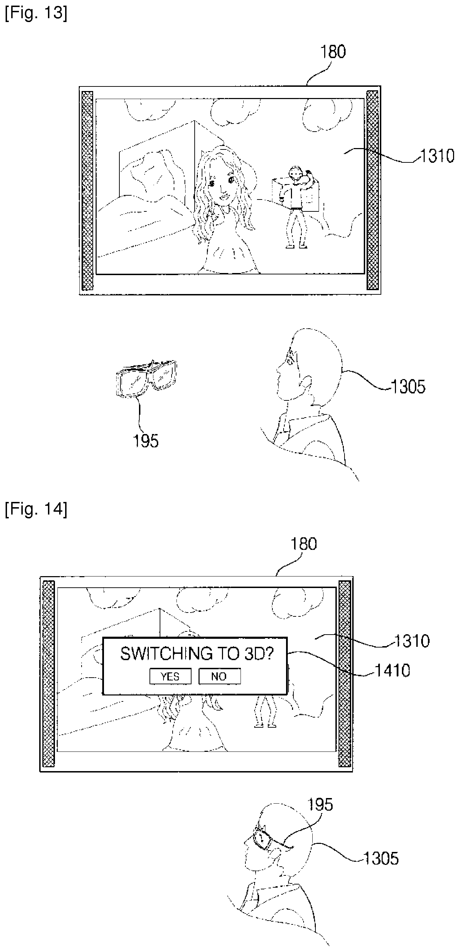

FIGS. 13 and 14 are views referred to for describing 3D imaging when a user 1305 wears the 3D glasses 195.

FIG. 13 illustrates a 2D image 1310 displayed on the display 180, as in step S1105 of FIG. 12. As noted from FIG. 13, the user 1305 does not wear the 3D glasses 195.

FIG. 14 illustrates an object 1410 asking the user whether to switch to 3D on the display 180 as in step S1120 of FIG. 12. When the user 1305 puts on the 3D glasses 195, the 3D glasses 195 senses the 3D glasses-wearing through at least one of the sensor units 212, 214 and 216 or through the switch 218 and transmits a glasses-wearing sensing signal to the image display apparatus 100.

Therefore, the controller 170 of the image display apparatus 100 receives the glasses-wearing sensing signal through the wireless communication module 198 and controls the object 1410 asking the user whether to switch to 3D to be displayed on the display 180. As the user can select 2D-to-3D switching simply in this manner, user convenience is increased.

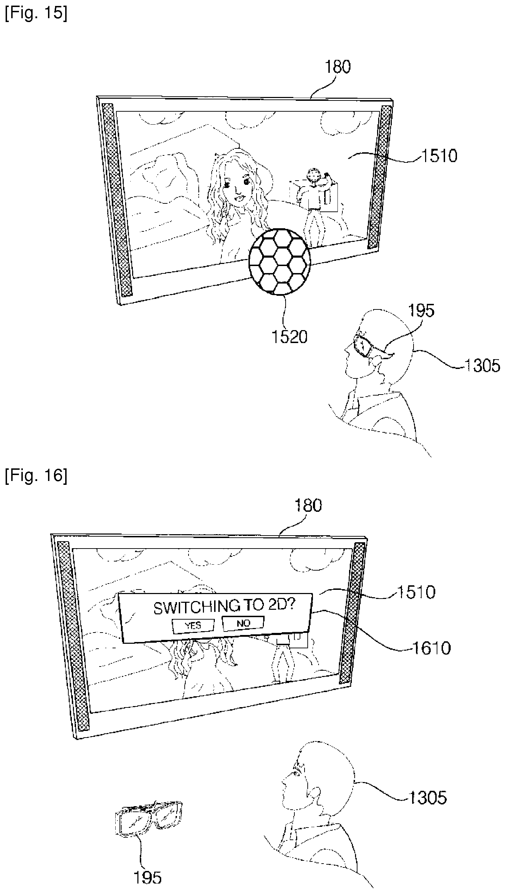

FIGS. 15 and 16 are views referred to for describing 2D imaging when the user 1305 takes off the 3D glasses 195.

FIG. 15 illustrates a 3D image 1510 and a 3D object 1520 that are displayed on the display 180, as in step S1125 of FIG. 12. As noted from FIG. 15, the user 1305 wears the 3D glasses 195.

FIG. 16 illustrates an object 1510 asking the user to switch to 2D on the display 180 as in step S1140 of FIG. 12. When the user 1305 takes off the 3D glasses 195, the 3D glasses 195 senses the 3D glasses-no wearing through at least one of the sensor units 212, 214 and 216 or through the switch 218 and transmits a glasses-no wearing sensing signal to the image display apparatus 100.

Therefore, the controller 170 of the image display apparatus 100 receives the glasses-no wearing sensing signal through the wireless communication module 198 and controls the object 1510 asking the user whether to switch to 2D to be displayed on the display 180. As the user can select 3D-to-2D switching simply in this manner, user convenience is increased.

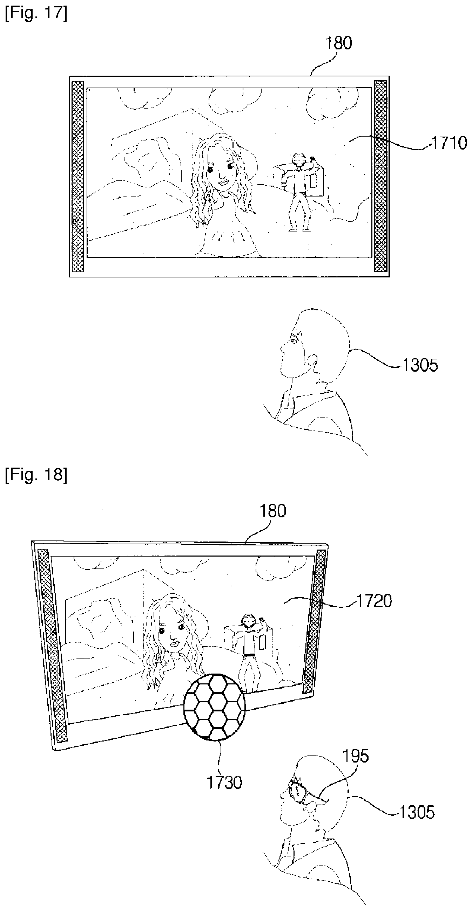

FIGS. 17 and 18 illustrate a luminance control during 2D-to-3D switching.

Referring to FIG. 17, if the user 1305 does not wear the 3D glasses 195, the display 180 displays a 2D image 1710.

Referring to FIG. 18, when the user 1305 puts on the 3D glasses 195, the display 180 displays a 3D image 1720 and a 3D object 1730 on the display 180.

Notably, the luminance of the 3D image 1720 illustrated in FIG. 18 is higher than that of the 2D image 1710 illustrated in FIG. 17. Therefore, the user 1305 can view the 3D image 1720 clearly, with an increased convenience.

Besides the luminance control illustrated in FIGS. 17 and 18, color or contrast may be controlled so that an image can be displayed with an optimal image quality.

FIG. 19 is a graph comparing 2D imaging and 3D imaging in terms of current level.

Referring to FIG. 19, less current per unit frame flows through the backlight lamps when a 3D image is displayed than when a 2D image is displayed. This means that a product between a time and a current level is smaller for 3D imaging than for 2D imaging.

In accordance with the exemplary embodiment, in order to prevent a decrease in luminance during 3D imaging than during 2D imaging, an instantaneous level H2 of a current i_{3D} flowing through the backlight lamps 252-1 to 252-4 for displaying a 3D image is set to be higher than an instantaneous level H1 of a current i_{2D} flowing through the backlight lamps 252-1 to 252-4 for displaying a 2D image. Accordingly, the 3D image is displayed with an improved luminance.

While not shown, when the user does not wear the 3D glasses 195, the user cannot view an on-going 3D image normally on the display 180. Thus unnecessary power can be saved by decreasing the level of current or brightness.

The image display apparatus, the 3D glasses, and the method for operating the same according to the foregoing exemplary embodiments are not restricted to the exemplary embodiments set forth herein. Therefore, variations and combinations of the exemplary embodiments set forth herein may fall within the scope of the present invention.

The method for operating an image display apparatus according to the foregoing exemplary embodiments may be implemented as code that can be written on a computer-readable recording medium and can thus be read by a processor. The computer-readable recording medium may be any type of recording device in which data is stored in a computer-readable manner. Examples of the computer-readable recording medium include a ROM, a RAM, a CD-ROM, a magnetic tape, a floppy disc, an optical data storage, and a carrier wave (e.g., data transmission through the internet). The computer-readable recording medium can be distributed over a plurality of computer systems connected to a network so that computer-readable code is written thereto and executed therefrom in a decentralized manner. Functional programs, code, and code segments needed for realizing the embodiments herein can be construed by one of ordinary skill in the art.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. Three-dimensional -3D- glasses comprising:
a first sensor unit (212) to sense pressure when a user puts on or takes off a 3D glasses (195);
a second sensor unit (214) to sense unfolding or folding of the 3D glasses (195) when the user puts on or takes off the 3D glasses (195);
a third sensor unit (216) to sense a resistance value or a capacitance value on a contact surface when the user puts on or takes off the 3D glasses (195);
a switch (218) to switch on or off power;
a wireless communication module (230); and
a controller (220) to determine whether the user wears the 3D glasses (195) or not through the first, second and third sensor units (212), (214) and (216), and to control the wireless communication module (230) to transmit a glasses-wearing or no wearing sensing signal indicating whether the user wears the 3D glasses (195) or not.

2. An image display apparatus comprising:
a display (180);
a wireless communication module (198) to receive a signal indicating whether a user wears three-dimensional -3D- glasses (195); and
a controller (170) to control a two-dimensional -2D- image displayed on the display to be converted to a 3D image or to control a 3D image displayed on the display to be converted to a 2D image, and to periodically sense whether the user wears the 3D glasses (195) with the 3D image displayed on the display (180), according to the signal, and wherein the signal is received based on pressure when the user puts on or takes off the 3D glasses (195), unfolding or folding of the 3D glasses (195) when the user puts on or takes off the 3D glasses (195), and a resistance value or a capacitance value on a contact surface when the user puts on or takes off the 3D glasses (195),
wherein the display (180) includes:
an image quality setter (182) to change at least one of luminance, color, and contrast for 2D imaging and 3D imaging according to the signal; and
a power setter (184) to set different power levels for 2D imaging and 3D imaging according to the signal,
wherein, when it is determined that the user wears the 3D glasses (195) during playing of a first broadcast channel that provides 2D images on the display (180), the controller (170) automatically switches the first broadcast channel to a second broadcast channel that provides 3D images.

3. The image display apparatus according to claim 2, wherein the display (180) further includes a 3D/2D setter (186) to perform video signal processing when the 2D image is displayed or when the 3D image is displayed.

4. The image display apparatus according to claim 2, wherein the controller (170) controls at least one of luminance, color, contrast and power to be different for the 2D image and the 3D image.

5. The image display apparatus according to claim 2, wherein if the display includes a plurality of backlight lamps on a rear surface of a display panel, less current flows through the backlight lamps when the 3D image is displayed than when the 2D image is displayed.

6. The image display apparatus according to claim 2, wherein if the display includes a plurality of backlight lamps on a rear surface of a display panel, current flows through the backlight lamps at a higher level when the 3D image is displayed than when the 2D image is displayed.

7. The image display apparatus according to claim 2, further comprising an external device interface to transmit data to an external or receiving data from the external device, wherein the controller controls a 2D image received from the external device to be converted to a 3D image or controls a 3D image received from the external device to be converted to a 2D image, according to the signal.

## Patentansprüche

1. Dreidimensionale - 3D - Brille mit:
einer ersten Sensoreinheit (212), um Druck zu spüren, wenn ein Benutzer eine 3D-Brille (195) auf- oder absetzt;
einer zweiten Sensoreinheit (214), um Auf- oder Zusammenklappen der 3D-Brille (195) zu spüren, wenn der Benutzer die 3D-Brille (195) auf- oder absetzt;
einer dritten Sensoreinheit (216), um einen Widerstandswert oder einen Kapazitätswert auf einer Kontaktoberfläche zu spüren, wenn der Benutzer die 3D-Brille (195) auf- oder absetzt;
einem Schalter (218), um Strom ein- oder auszuschalten;
einem drahtlosen Kommunikationsmodul (230); und
einer Steuerung (220), um durch die erste, zweite und dritte Steuereinheit (212), (214) und (216) festzustellen, ob der Benutzer die 3D-Brille (195) trägt oder nicht, und um das drahtlose Kommunikationsmodul (230) zu steuern, um ein Brille-tragen- oder Nichttragen-Signal zu übertragen, das anzeigt, ob der Benutzer die 3D-Brille (195) trägt oder nicht.

2. Eine Bild-Anzeige-Vorrichtung mit:
einer Anzeige (180);
einem drahtlosen Kommunikationsmodul (198), um ein Signal zu empfangen, das anzeigt, ob der Benutzer eine dreidimensionale - 3D - Brille (195) trägt; und
einer Steuerung (170), um zu steuern, dass ein auf der Anzeige angezeigtes zweidimensionales - 2D - Bild in ein 3D-Bild umgewandelt wird, oder um zu steuern, dass ein auf der Anzeige angezeigtes 3D-Bild in ein 2D-Bild umgewandelt wird, und
um in regelmäßigen Abständen zu spüren, ob der Benutzer gemäß dem Signal die 3D-Brille (195) mit dem auf der Anzeige (180) angezeigten 3D-Bild trägt, und wobei das Signal empfangen wird, basierend auf Druck wenn der Benutzer die 3D-Brille (195) auf- oder absetzt, auf Auf- oder Zusammenklappen der 3D-Brille (195) wenn der Benutzer die 3D-Brille (195) auf- oder absetzt, und einem Widerstandswert oder Kapazitätswert auf einer Kontaktoberfläche, wenn der Benutzer die 3D-Brille (195) auf- oder absetzt,
wobei die Anzeige (180) aufweist:
einen Bild-Qualitäts-Einrichter (182), um mindestens Helligkeit, Farbe und/oder Kontrast für 2D-Bildgebung und 3D-Bildgebung gemäß dem Signal zu ändern; und
einem Stromeinrichter (184), um verschiedene Leistungsstufen für 2D-Bildgebung und 3D-Bildgebung gemäß dem Signal einzurichten,
wobei, wenn festgestellt wird, dass der Benutzer die 3D-Brille (195) trägt während ein erster Übertragungskanal abgespielt wird, der auf der Anzeige (180) 2D-Bilder zur Verfügung stellt, die Steuerung (170) den ersten Übertragungskanal automatisch auf einen zweiten Übertragungskanal umschaltet, der 3D-Bilder zur Verfügung stellt.

3. Bild-Anzeige-Vorrichtung nach Anspruch 2, wobei die Anzeige (180) ferner einen 2D/3D-Einrichter (186) aufweist, um eine Videosignalbearbeitung auszuführen, wenn das 2D-Bild angezeigt wird oder wenn das 3D-Bild angezeigt wird.

4. Bild-Anzeige-Vorrichtung nach Anspruch 2, wobei die Steuerung (170) mindestens Helligkeit, Farbe, Kontrast und/oder Leistung steuert, so dass sie für das 2D-Bild und das 3D-Bild unterschiedlich sind.

5. Bild-Anzeige-Vorrichtung nach Anspruch 2, wobei, wenn die Anzeige mehrere Hintergrundlampen auf einer hinteren Oberfläche eines Anzeigefelds aufweist, weniger Strom durch die Hintergrundlampen fließt wenn das 3D-Bild angezeigt wird, als wenn das 2D-Bild angezeigt wird.

6. Bild-Anzeige-Vorrichtung nach Anspruch 2, wobei, wenn die Anzeige mehrere Hintergrundlampen auf einer hinteren Oberfläche eines Anzeigefelds aufweist, Strom mit höherer Stärke durch die Hintergrundlampen fließt, wenn das 3D-Bild angezeigt wird, als wenn das 2D-Bild angezeigt wird.

7. Bild-Anzeige-Vorrichtung nach Anspruch 2, ferner mit einer externen Geräteschnittstelle, um Daten an eine externe Vorrichtung zu übertragen oder von ihr zu empfangen,
wobei die Steuerung gemäß dem Signal ein von der externen Vorrichtung empfangenes 2D-Bild steuert, so dass es in ein 3D-Bild umgewandelt wird, oder ein von der externen Vorrichtung empfangenes 3D-Bild steuert, so dass es in ein 2D-Bild umgewandelt wird.

## Revendications

1. Lunettes tridimensionnelles, 3D, comprenant :
une première unité de détection (212) pour détecter une pression lorsqu'un utilisateur met ou retire des lunettes 3D (195) ;
une deuxième unité de détection (214) pour détecter un dépliage ou un pliage des lunettes 3D (195) lorsque l'utilisateur met ou retire les lunettes 3D (195) ;
une troisième unité de détection (216) pour détecter une valeur de résistance ou une valeur de capacitance sur une surface de contact lorsque l'utilisateur met ou retire les lunettes 3D (195) ;
un commutateur (218) pour une mise hors ou sous tension ;
un module de communication sans fil (230) ; et
un dispositif de commande (220) pour déterminer si l'utilisateur porte les lunettes 3D (195) ou non par le biais des première, deuxième et troisième unités de détection (212), (214) et (216), et pour commander le module de communication sans fil (230) pour transmettre un signal de détection de port de lunettes ou de non-port de lunettes indiquant si l'utilisateur porte ou non les lunettes 3D (195).

2. Appareil d'affichage d'images comprenant :
un dispositif d'affichage (180) ;
un module de communication sans fil (198) pour recevoir un signal indiquant si un utilisateur porte des lunettes tridimensionnelles, 3D, (195) ; et
un dispositif de commande (170) pour commander une image bidimensionnelle, 2D, affichée sur le dispositif d'affichage pour être convertie en une image 3D ou pour commander une image 3D affichée sur le dispositif d'affichage pour être convertie en une image 2D, et pour détecter périodiquement si l'utilisateur porte les lunettes 3D (195) avec l'image 3D affichée sur le dispositif d'affichage (180), selon le signal, et
dans lequel le signal est reçu sur la base d'une pression lorsque l'utilisateur met ou retire les lunettes 3D (195), du dépliage ou du pliage des lunettes 3D (195) lorsque l'utilisateur met ou retire les lunettes 3D (195), et d'une valeur de résistance ou d'une valeur de capacitance sur une surface de contact lorsque l'utilisateur met ou retire les lunettes 3D (195),
dans lequel le dispositif d'affichage (180) inclut :
un régleur de qualité d'image (182) pour changer au moins un parmi la luminance, la couleur et le contraste pour une imagerie 2D et pour une imagerie 3D selon le signal ; et
un régleur de puissance (184) pour régler différents niveaux de puissance pour une imagerie 2D et pour une imagerie 3D selon le signal,
dans lequel, lorsqu'il est déterminé que l'utilisateur porte les lunettes 3D (195) durant la lecture d'un premier canal de diffusion qui fournit des images 2D sur le dispositif d'affichage (180), le dispositif de commande (170) commute automatiquement le premier canal de diffusion vers un second canal de diffusion qui fournit des images 3D.

3. Appareil d'affichage d'images selon la revendication 2, dans lequel le dispositif d'affichage (180) inclut en outre un régleur 3D/2D (186) pour réaliser un traitement de signal vidéo lorsque l'image 2D est affichée ou lorsque l'image 3D est affichée.

4. Appareil d'affichage d'images selon la revendication 2, dans lequel le dispositif de commande (170) commande au moins un parmi la luminance, la couleur, le contraste et la puissance pour qu'ils soient différents pour l'image 2D et pour l'image 3D.

5. Appareil d'affichage d'images selon la revendication 2, dans lequel si le dispositif d'affichage inclut une pluralité de lampes de rétroéclairage sur une surface arrière d'un panneau d'affichage, moins de courant s'écoule à travers les lampes de rétroéclairage lorsque l'image 3D est affichée que lorsque l'image 2D est affichée.

6. Appareil d'affichage d'images selon la revendication 2, dans lequel si le dispositif d'affichage inclut une pluralité de lampes de rétroéclairage sur une surface arrière d'un panneau d'affichage, un courant s'écoule à travers les lampes de rétroéclairage à un niveau plus élevé lorsque l'image 3D est affichée que lorsque l'image 2D est affichée.

7. Appareil d'affichage d'images selon la revendication 2, comprenant en outre une interface de dispositif externe pour transmettre des données à un dispositif externe ou pour recevoir des données du dispositif externe,
dans lequel le dispositif de commande commande une image 2D reçue depuis le dispositif externe pour qu'elle soit convertie en image 3D ou commande une image 3D reçue depuis le dispositif externe pour qu'elle soit convertie en une image 2D, selon le signal.
